# EUROPEAN PATENT APPLICATION

(11) **EP 4 707 761 A1**
(43) Date of publication of application: **11.03.2026**
(21) Application number: 24199131.4
(22) Date of filing: 09.09.2024
(51) Int. Cl.: G01L 27/00

(54) **PRESSURE SENSOR, METHOD, BRAKE SYSTEM, VEHICLE AND USE OF A PRESSURE SENSOR**

(71) Applicant: KB Intellectual Property GmbH & Co. KG, 82049 Pullach (DE)
(72) Inventor: Huber, Christian, 80937 Munich (DE); Wessely, Bjoern, 80805 Munich (DE)

(57) **Abstract**

A pressure sensor (1) is disclosed. The pressure sensor (1) comprising
- a data port (2) configured for providing sensor data,
- a sensing element (3) configured for sensing a pressure measurement value based on a pressure supplied to the sensing element,
- a pressure port (4) for receiving a pressure and for supplying the pressure to the sensing element (3), and
- data processing means (5).

Further, a method, a brake system (50), a vehicle (100) and the use of a pressure sensor (1) are disclosed.

## Description

The present disclosure relates to a pressure sensor, a method, a brake system, a vehicle and a use of a pressure sensor.

In modern vehicles, in particular commercial vehicles or busses, there is an increasing need for self-diagnosing functions to ensure that malfunctions of subsystems, devices or even small entities like sensors can be detected in time and to enable to take countermeasures against a complete failure of the vehicle. For example, as a countermeasure, a fallback-mode may be activated, wherein such system or device is operated in an emergency operation.

As a sensor is a comparatively small entity that may cause the complete failure of the subsystems or device it is related to, and therefore possibly of the complete vehicle, there is a need to provide a solution for a sensor that allows to carry out a self-diagnosis.

This objective is achieved by the subject-matter of the independent claims. Further embodiments are the subject-matter of the dependent claims, the following description and the enclosed drawings.

According to a first aspect of the disclosure, a pressure sensor is provided. The pressure sensor comprises a data port configured for providing sensor data, a sensing element configured for sensing a pressure measurement value based on a pressure supplied to the sensing element, a pressure port for receiving a pressure and for supplying the pressure to the sensing element, and a data processing means.

The sensor data may comprise measuring data describing the measurement value itself. Alternatively or additionally, the sensor data may comprise a processed, in particular corrected or filtered, value like a pressure value based in the measurement value. E.g. the measuring data may comprise a respective value, in particular a digital or analog value, related to a measured pressure supplied to the pressure port. Additionally, or alternatively, the sensor data may comprise diagnostic information generated by the sensor. The diagnostic information may be suitable or configured for providing an information about the current status of the sensor to a receiver. The receiver may be a control means like a control unit of a system the brake sensor is provided in, e.g. a pressure-controlled brake system like a pneumatic or hydraulic brake system. The sensor port may be configured as an electric or electronic interface, in particular comprising a plug connector configured to be electrically connected to a data line, configured to connect the sensor to the receiver.

The sensing element may comprise a micro-electro-mechanic system (MEMS), in particular a resistively or a capacitively operating MEMS, or a bridge connection, in particular, a full Wheatstone Bridge. The pressure supplied to the sensing element from the pressure port causes mechanical stress and/or deformation in the MEMS or in the bridge connection, wherein the sensing element may be configured to provide an electric or electronic signal indicating the pressure measurement value.

The signal may be provided to the data processing means, wherein the signal is processed, in particular the pressure measurement value is identified and/or the signal is filtered and/or corrected. The processing means may be configured to provide a signal, in particular the processed signal, as the sensor data or a part of the sensor data, by the data port. Thereby, the pressure value may be provided in electric or electronic form via the data port.

The data port may be configured as a connector, wherein a data line may be plugged-in to provide the sensor data to other components configured for receiving or processing the sensor data. In particular, the connector may be configured to secure or lock the data line in the connector. Thereby, the data line can be secured in the connector and loosening of the plugged-in data line, e.g. due to vibration, may be avoided.

The sensor data may comprise a pressure value based on the pressure measurement value as described above and/or status information of the sensor. Thereby, the sensor may be configured to send status information to other receivers, like control units of the brake system or the like. The status information may include information, in particular about current technical aspects of the sensor, indicating whether the sensor is in a normal state or in a failure state and/or whether the sensor data, in particular whether the pressure value, is defective and should not be used. In this case, the receiver may switch to the use of another pressure value, e.g., a replacement value.

The data processing means may be configured as electric or electronic data processing means.

According to this disclosure, a sensor is provided, wherein the sensor may be configured to provide information about the status and thereby about the quality of the pressure value.

According to one embodiment, the pressure sensor is configured as a pressure sensor for a brake system of a vehicle. The brake system may be configured as a pneumatic brake system for a commercial vehicle or for a rail vehicle. By using such pressure sensor in the brake system, the brake system may become more reliable, wherein failures of the sensor are detected as soon as possible and maintenance measures may be taken.

According to one embodiment, the data processing means comprises hardware processing means and/or software processing means. The hardware processing means may comprise an ASIC or an ASSP. Thereby, the sensor may be specified to the purpose of measuring a pressure, in particular a pneumatic pressure. By using such hardware processing means, the sensor may comprise a smaller design or shape, as the ASIC or ASSP can be optimized to the application of the pressure sensor. Alternatively or additionally, the hardware processing means comprises general data processing means like a control unit or a chip. Such general data processing means may be configured as a free programmable data processing means. Therefore, such general data processing means is capable for freely implementing, realizing and/or adjusting the functionalities of the sensor. In particular, the data processing means may be realized as analog or digital data processing means or as a combination thereof. Furthermore, software processing means allow the realization and in particular the adjustment if the data processing means, e.g. by a developer later in the design process.

According to one embodiment, the sensor, in particular the data processing means, is configured to carry out a self-monitoring method. Thereby, the sensor may be configured to, in particular actively, carry out the self-monitoring. Thereby sensor data, in particular status information as described above, may be generated based on the result of the self-monitoring method or the status information may be the result of the self-monitoring method.

According to one embodiment, the self-monitoring method comprises at least one of
- a temperature-monitoring step
- a signal diagnosis step
- hardware diagnosis step.

The temperature-monitoring step may be carried out by using a temperature sensor of the pressure sensor or by using a separate temperature sensor. For using a separate temperature sensor, the pressure sensor may comprise a separate port configured to be connected to the temperature sensor, wherein the temperature sensor can provide measurement values to the pressure sensor. In particular, the data processing means of the pressure sensor may be configured to process the information from the temperature sensor and/or from the temperature-monitoring step. Thereby, the data processing means may include the information into the sensor data and/or into the status information provided by the data port.

The signal diagnosis step may be a step, in particular carried out by the data processing means, wherein the signals from the sensing element, in particular including the pressure measurement value, and/or the signal provided by the data port, in particular including the sensor data, and/or other internal signals, in particular including measurement values, are analyzed whether they are plausible. If not, the sensor may be configured to include an information to the sensor data provided via the data port and/or to take countermeasures. As countermeasure, the sensor may be configured to include a replacement value to the sensor data, instead of the pressure value. Preferably, such replacement value may be labeled as such, to ensure that receivers of the replacement value, like a control unit of the brake system, are informed that the pressure value received is not based on the measurement value. This allows the receiver to decide whether the replacement value shall be used. In particular, a non-plausible signal may be a signal comprising a permanently constant value or comprising a signal with the wrong sign, e.g., when a positive signal is awaited, however, the actual signal is negative. This may be the case when a pressure is measured, however, the pressure may only have pressure values between a minimum value and a maximum pressure value, wherein the minimum value and the maximum pressure value have the same sign, wherein a non-plausible signal would differ in sign from the sign of the minimum value and the maximum pressure value. Additionally or alternatively, a non-plausible signal would be a signal representing a measurement value that is not located between the minimum value and the maximum pressure value.

The hardware diagnosis step may comprise comparing a test pressure value of a test pressure which is supplied to the pressure port with the pressure measurement value generated by the sensing element or by comparing the test pressure value of the test pressure which is supplied to the pressure port with the pressure value of the sensor data supplied via the data port. For generating the test pressure, the system the sensor is provided in, like the brake system, may be configured to generate the test pressure which is a known pressure for the pressure sensor. Thereby, a comparison of the known test pressure value with the pressure measurement value or with the pressure value based on the processed pressure measurement value may identify the failures in the hardware of the pressure sensor.

According to an embodiment, the pressure sensor is configured to be set into a diagnostic mode. According to one example, the self-monitoring method comprises a step of setting the sensor into a diagnostic mode. In the diagnostic mode, the sensor may not work in its usual way, instead, the sensor is set to the diagnostic mode, wherein the sensor may be configured to test the sensor with predefined test programs. In particular, the sensor or the data processing means may comprise predetermined test or reference values, wherein the sensor, in particular the data processing means, may be configured to compare signals generated during the diagnostic mode or during the predefined test programs, with these predetermined test or reference values to identify failures. Alternatively, the sensor may be configured to still work in its usual way, when it is in the diagnostic mode. In particular, the sensor may be configured to still provide pressure values via the data port. Both cases are described later more in detail.

According to one embodiment, the sensor comprises non-volatile memory. In the non-volatile memory, parameters like a correction parameter or a correction lookup table may be saved, wherein the data processing means is configured to correct the pressure measurement value by these correction parameters or by the correction lookup table. The nonvolatile memory may be used to save diagnosis information as well. E.g., error messages or status information.

According to one embodiment, the sensor data provided via the data port comprise pressure value and/or diagnoses information and/or status information. This is possible by configuration of the data port, respectively.

The pressure sensor according to any of the preceding claims, wherein the pressure sensor, in particular the data processing means, is configured according to ISO 26262:2018. Thereby, it is ensured that the sensor fulfills the criteria of this norm and thereby, the sensor gets more reliable and secure against failure.

According to an embodiment, the pressure sensor is configured as a pneumatic pressure sensor or as a hydraulic pressure sensor. Thereby, the pressure sensor may be used in hydraulic or pneumatic systems, in particular in such brake systems.

According to one embodiment, the pressure sensor is configured to be switched into a calibration state. Preferably, the data port is configured to receive calibration data via the data line connected to the data port. Thereby, the pressure sensor may be adapted to changed conditions of the sensor or of the brake system.

According to a second aspect, a method for operating a pressure sensor, wherein the method comprises at least one of
- a temperature-monitoring step
- a signal diagnosis step
- a hardware diagnosis step, and
- a calibration step.

For a person skilled in the art, it is clear that structural features described above or below may be analogously understood as features of the method.

According to a third aspect, a brake system comprising a pressure sensor as described above is provided. The brake system may be a fluidically operated brake system like a pneumatically or hydraulically operated brake system.

According to a fourth aspect, a vehicle comprising a pressure sensor as described above or a brake system as described above is provided. The brake system may be a fluidically operated brake system like a pneumatically or hydraulically operated brake system.

According to a fifth aspect, a use of a pressure sensor as described above in a brake system of a vehicle or in a vehicle is provided. The brake system may be a fluidically operated brake system like a pneumatically or hydraulically operated brake system.

In the following, preferred aspects of the present disclosure are described.
Fig. 1 shows a perspective view of a pressure sensor according to the present disclosure.
Fig. 2 shows a schematic perspective sectional view of a pressure sensor according to the present disclosure.
Fig. 3 shows a pressure sensor according to the present disclosure in combination with a pressure guiding element.
Fig. 4 shows a vehicle with a brake system.
Fig. 5 shows a schematic layout of a pressure sensor.
Fig. 6 shows a schematic layout of a pressure sensor.
Fig. 7 shows a schematic layout of a pressure sensor.
Fig. 8 shows a schematic layout of a pressure sensor.

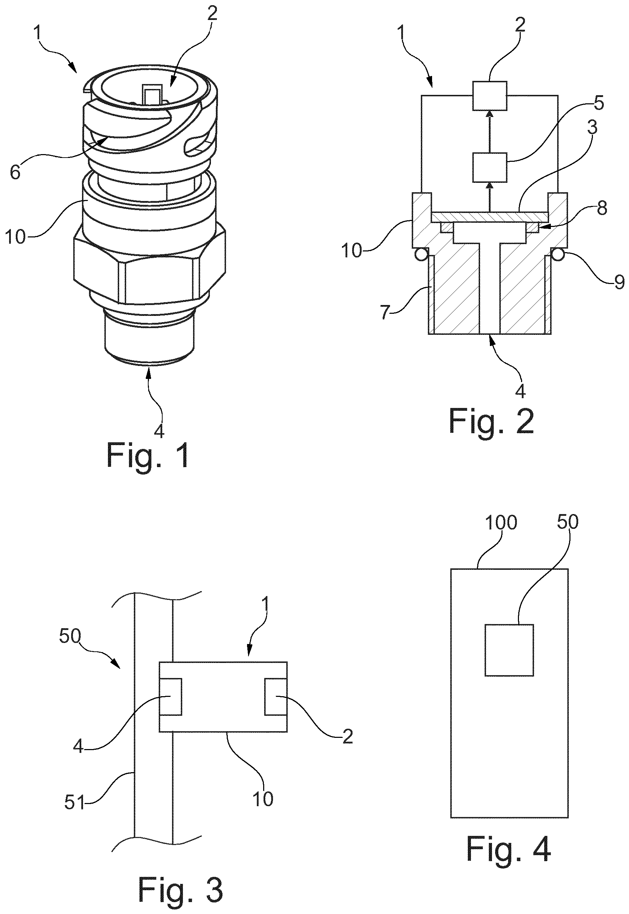

**Fig. 1** shows a perspective view of a pressure sensor according to the present disclosure and **Fig. 2** shows a schematic perspective sectional view of a pressure sensor according to the present disclosure. **Fig. 3** shows a pressure sensor according to the present disclosure in combination with a pressure guiding element. In the following, the sensor is described with reference to Fig. 1 to 3.

A pressure sensor 1 is shown. The sensor 1 comprises a data port 2 configured for providing sensor data, a sensing element 3 configured for sensing a pressure measurement value based on a pressure supplied to the sensing element, a pressure port 4 for receiving a pressure and for supplying the pressure to the sensing element 3, and data processing means 5. The sensor 1 comprises a housing 10, wherein the ports 2, 4 are arranged on the housing 10 and wherein the sensing element 3 and the data processing means 5 are arranged within the housing 10.

According to the shown embodiment, the sensor 1 comprises fastening means 6 at the data port 2, to securely lock a connector of a data line to the data port 2. In the shown embodiment, the fastening means 6 is configured as a bayonet mechanism a connector of the data line can engage with. Preferably, the fastening means 6 is configured according to DIN STD 72585-A1-3.2-SN to ensure a certain standard. However, the fastening means 6 may be configured as a thread or as another suitable locking mechanism as well.

According to the shown embodiment, the sensor 1 comprises fastening means 7 at the pressure port 4, to securely connect the sensor 1, via the pressure port 4 to a pressure guiding element 51 of a brake system shown in Fig. 3, like a brake pressure line or a pressure chamber of a cylinder, like a brake cylinder. According to the shown embodiment, the fastening means 7 is configured as a thread for engaging with an interface, in particular a port, of the pressure guiding element 51. Preferably, the fastening means 7 is configured according to ISO 6149-3 M16x1.5 to ensure a secure and/or sealed connection. However, the fastening means 7 may be configured as another suitable locking mechanism as well.

The pressure port 4 of the sensor 1 may comprise sealing means configured to engage with the interface of the guiding element 51 to seal the interface and thereby the interior of the pressure guiding element 51.

As it can be seen in Fig. 3, the pressure port 4 is in communication with the interior of the pressure guiding element 51, thereby, pressure like pneumatic or hydraulic pressure is applied to the pressure port 4 and thereby applied through the pressure port 4 to the pressure sensing element 3 shown in Fig. 2. The pressure sensing element 3 is configured to generate an electric or electronic signal in reaction to the pressure applied thereto, wherein the signal is a pressure measurement value indicating the amount of pressure applied to the pressure port 4 and therefore indicating the amount of pressure in the interior of the pressure guiding element 51.

The pressure sensing element 3 may be configured to deform in reaction to the applied pressure and, wherein the deformation leads to a change in the signal provided by the pressure sensing element 3. In particular, the pressure sensing element 3 may be configured as or comprise a MEMS or a Full Wheatstone Bridge.

The brake system 50 may be provided in a vehicle 100 as shown in **Fig. 4****.** The vehicle 100 may be configured as a commercial vehicle like a truck or a trailer or a combination of a truck and a trailer.

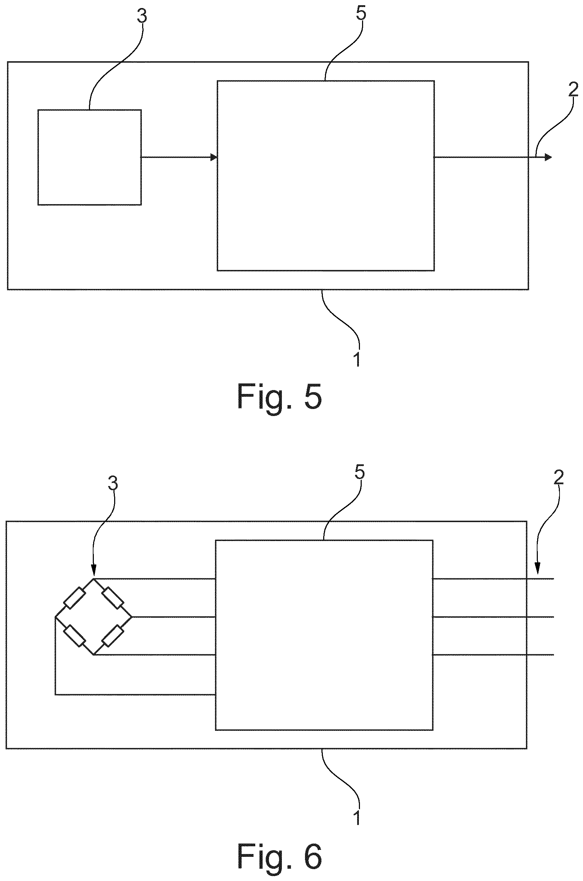

The sensor 1 comprises a data processing means 5 configured to process the pressure measurement value generated by the pressure sensing element 3. The processing of the pressure measurement value may be carried out by the data processing means as described above. The data processing means is further described in the Figures 5 to 8.

In the following, schematic layouts according to several embodiments of the sensor are shown in the Figures 5 to 8.

In **Fig. 5** a sensor 1 is shown comprising a pressure sensing element 3 and a data processing means 5. As it is indicated by the arrows in the drawing, a data connection is provided between the sensing element 3 and the data processing means 5, whereby the sensing element 3 is configured to send a pressure measurement value to the data processing means 5 and the data processing means 5 is configured to provide a pressure value based on the pressure measurement value via the data port 2. This pressure value may be used by other elements or components like control units connected to the data port.

The data processing means 5 may be configured as an ASIC or ASSP.

ASICs are suitable for mass-produced devices to reduce costs.

According to one embodiment, the ASIC comprises at least one microprocessor and/or at least one signal processor integrated in the ASIC according to a system-on-a-chip, whereby a certain flexibility for realizing the desired functionality can be achieved by the software running on the at least one microprocessor and/or on the at least one signal processor.

Due to the adaption of the architecture of an ASIC to a specific problem, the ASIC may work very efficiently and faster, in particular many times faster, than a functionally equivalent implementation using software in a microcontroller.

Due to their exclusivity, providing one or more ASICs may prevent replicas, at least of the respective part of the sensor 1.

Such ASICs, which may even be designed for just one specific model series of the sensor 1, is cost saving compared to the design with standard components, in particular in the case of high production quantities.

The ASICs may be configured to work in a space-, consumption-, cost- or performance-optimized manner. Thereby, the sensor 1 may be optimized in one or more of these categories, by designing the ASCIs respectively.

For simplification, further elements of the sensor 1 like the pressure port 4 are not shown.

The sensing element 3 may be configured as a Full Wheatstone Bridge as shown in **Fig. 6****.** As describes above a Full Wheatstone Bridge or a MEMS react to deformation due to the pressure applied to the pressure port 4 shown in Fig. 1 to 3 and applied to the pressure sensing element 3. Such elements like the Full Wheatstone Bridge or a MEMS or in general elements configured to generate the pressure measurement value from the deformation due to the pressure, may be sensitive to heat applied to the pressure sensing element 3. This heat may be the heat of the pressurized fluid in the interior of the pressure guiding element 51 shown in Fig. 3, however other heat sources of the vehicle 100 or of the bake system 50 may also or alternatively apply heat to the sensing element 3. E.g., these heat sources may be a motor or gearbox of the vehicle 100.

Due to the heat impact, the signal from the sensing element 3 and therefore the pressure measurement value may include an offset or a drift.

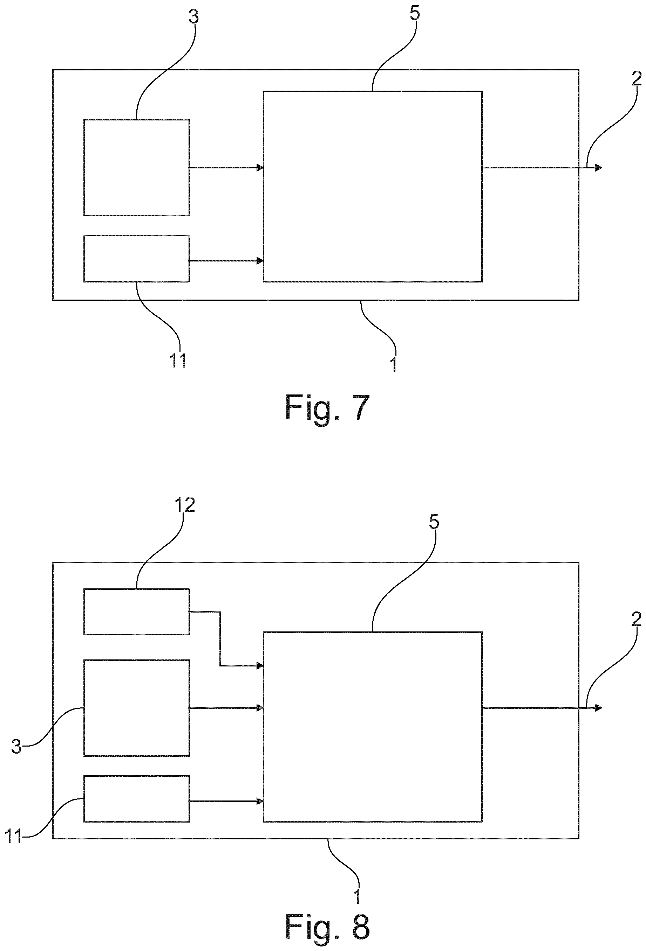

The pressure sensor 1, in particular the sensing element 3 respectively the processing means 5, may be configured for correcting the heat influence in the sensing element 3 and therefore on the pressure measurement value. This may be realized by a sensing element 3 that only deforms in a negligible amount for a certain temperature range. This may be the temperature range when the brake system 50 or the vehicle 100 operated. Alternatively or additionally, the sensor 1, in particular the data processing means 5, may be configured to correct the influence of the heat impact in the pressure measurement value. As shown in **Fig. 7****,** the sensor 1 comprises a temperature sensor 11 configured to measure the temperature of the pressure sensing element 3 or of another relevant element like the data processing means 5. As shown in **Fig. 8****,** the sensor 1 comprises a further temperature sensor 12. E.g., the first temperature sensor 11 may be configured to measure the temperature of the sensing element 3 and/or the second temperature sensor 12 may be configured to measure the temperature of the data processing means 5 or of the sensing element 3. By measuring the temperature of the data processing means 5, the sensor 1 may analyze its current state and may take countermeasures like reducing the sampling rate if the temperature exceeds a predetermined threshold to reduce the temperature.

The temperature sensor 11 and/or the temperature sensor 12 are shown as part of the sensors 1 shown in the Figures 7 and 8. In this case one two temperature sensors 11, 12 may be configured as a part of the data processing means 5. Thereby, the sensor 1 may be an integral sensor 1.

However, further embodiments of the sensor 1 which are not shown here may also fall within the limits of this disclosure. E.g., one of the temperature sensors 11, 12 or both temperature sensors 11, 12 may be arranged separately and not as a part or subsystem of the sensor 1. In this case, the sensor 1 may comprise corresponding ports for the respective sensors 11, 12 to connect them with the data processing means 5. Thereby, the sensor 1 may be built in a smaller way compared to a full integration of the temperature sensors 11, 12. Additionally, or alternatively, it is possible to arrange the respective temperature sensors 11, 12 in an optimal position.

Independently form the arrangement of the temperature sensors 11, 12, the data processing means 5 may be configured to correct the heat impact on the pressure measurement value. E.g., therefore, the data processing means 5 may comprise correction data like a correction parameter or a correction lockup table depending on the current temperature measured by the temperature sensor 11 and/or by the temperature sensor 12. The correction data may be based on a known reaction of the sensing element 3 to the heat impact that is also known from the temperature measurement.

In the following some specific aspects of the sensor 1 are described.

The data processing means may be configured for digital compensation of sensor offset, sensitivity, temperature drift, and non-linearity is accomplished via an internal 16-bit RISC microcontroller running a ROM based correction algorithm with calibration coefficients stored in the non-volatile memory (NVM).

The data processing means 5 may be adjustable to different resistive sensor element types like full Wheatstone Bridge or a MEMS.

The data processing means 5 may be optimized for vehicle environments by overvoltage and reverse-polarity protection circuitry. The data processing means 5 may be additionally or alternatively configured for electromagnetic compatibility and/or for the full temperature range possible while operating the vehicle.

The sensor 1, in particular the data processing means 5, may comprise a multiplexer for selecting and transmitting the signals from either the sensing element 3 or the selected temperature sensors 11, 12. The signals may then be sent to a signal processing element of the sensor 1, in particular of the data processing means 5. The signal processing element may be configured as an analog-to-digital converter, wherein the multiplexer may send the signals in a defined sequence to the analog-to-digital converter.

The temperature sensors 11, 12 can either be an external diode, an external resistive temperature device, the temperature dependent resistance of the resistive bridge sensor, or an on-chip proportional-to-absolute-temperature source on the data processing means 5.

The sensor 1, in particular the data processing means 5, may be configured to carry out a digital signal correction. This may be carried out by a microcontroller, in particular a calibration microcontroller using ROM-resident correction formulas and sensor-specific coefficients stored in the non-volatile memory. The configuration data and the conditioning coefficients may be programmed into the NVM during the calibration process by the date port 2. During the calibration process, raw measurement values may be output via digital interfaces of the sensor 1.

The data processing means 5 may be configured to amplify the signal from the sensing element 3. Preferably, the sensor signal can be amplified by an on-chip programmable amplifier using a gain between 2 and 200. Alternatively, the PGA can be bypassed and the sensor signal is used directly. By the programmable amplifying feature, the controller 1 may be adjusted to different configurations of the sensing element 3.

For correction of the pressure measurement value, the data processing means 5 may be configured for analog and/or digital sensor offset compensation. For analog sensor offset compensation an offset compensation voltage may be added before analog amplification as otherwise the sensor signal would overdrive an analog portion of the data processing means 5. The digital sensor offset compensation may be processed as part of the digital signal conditioning of the data processing means 5. For large sensor offsets, e.g., up to three times higher than the sensor span, the digital compensation may generate a loss of resolution of up to 3 bit. Therefore, the measurement of the sensing element 3 may be carried out with a higher resolution.

Configuration and calibration data may be stored in an on-chip non-volatile memory (NVM), of the sensor 1, in particular of the data processing means 5, The NVM may use the floating gate storage principle.

The sensor 1, in particular the data processing means 5, are configured to carry out a self-diagnosis, wherein, if a fault is detected, a diagnostic mode is activated and the fault status is messaged, in particular via the data port. The diagnostic mode may be set to a static diagnostic mode, wherein the measuring procedure is stopped or to a temporary diagnostic mode, wherein the measurement procedure of the sensor 1 is maintained.

The pressure sensor 1 according to the present disclosure helps to fulfil the requests according to ISO 26262:2018 and/or to fulfil at least ASIL B.

### REFERENCE SIGNS

- 1: pressure sensor
- 2: data port
- 3: sensing element
- 4: pressure port
- 5: data processing means
- 6: fastening means
- 7: fastening means
- 8: sealing element
- 9: sealing element
- 10: housing
- 11: temperature sensor
- 12: temperature sensor
- 50: brake system
- 51: pressure guiding element
- 100: vehicle

## Claims

1. A pressure sensor (1) comprising
- a data port (2) configured for providing sensor data,
- a sensing element (3) configured for sensing a pressure measurement value based on a pressure supplied to the sensing element,
- a pressure port (4) for receiving a pressure and for supplying the pressure to the sensing element (3), and
- data processing means (5).

2. The pressure sensor (1) according to claim 1, wherein
the pressure sensor (1) is configured as a pressure sensor for a brake system (50) of a vehicle (100).

3. The pressure sensor (1) according to one of the preceding claims, wherein
the data processing means (5) comprises hardware processing means or software processing means.

4. The pressure sensor (1) according to one of the preceding claims, wherein
the sensor (1) is configured to carry out a self-monitoring method (150).

5. The pressure sensor (1) according to claim 4, wherein
the self-monitoring method (150) comprises at least one of
- a temperature-monitoring step
- a signal diagnosis step
- hardware diagnosis step.

6. The pressure sensor (1) according to claim 4 or 5, wherein
the self-monitoring method comprises a step of setting the sensor (1) into a diagnostic mode.

7. The pressure sensor (1) according to one of the preceding claims, wherein
the sensor (1) comprises non-volatile memory.

8. The pressure sensor (1) according to one of the preceding claims, wherein
the sensor data provided via the data port (2) comprise pressure measurement values or diagnoses information or status information.

9. The pressure sensor (1) according to any of the preceding claims, wherein the pressure sensor (1), in particular the data processing means, is configured according to ISO 26262:2018.

10. The pressure sensor (1) according to one of the preceding claims, wherein
the pressure sensor (1) is configured as a pneumatic pressure sensor or as a hydraulic pressure sensor.

11. The pressure sensor (1) according to one of the preceding claims, wherein
the pressure sensor (1) is configured to be switched into a calibration state.

12. Method for operating a pressure sensor (1), wherein the method comprises at least one of
- a temperature-monitoring step
- a signal diagnosis step
- a hardware diagnosis step, and
- a calibration step.

13. Brake system (50) comprising a pressure sensor (1) according to one of the claims 1 to 11.

14. Vehicle (100) comprising a pressure sensor (1) according to one of the claims 1 to 11 or a brake system (50) according to claim 13.

15. Use of a pressure sensor (1) according to one of the claims 1 to 11 in a brake system (50) of a vehicle (100) or in a vehicle (100).
